# EUROPEAN PATENT APPLICATION

(11) **EP 4 344 820 A1**
(43) Date of publication of application: **03.04.2024**
(21) Application number: 23192507.4
(22) Date of filing: 21.08.2023
(51) Int. Cl.: B23Q 3/155, B23B 31/113

(54) **TOOL HOLDER AND TOOL MAGAZINE**

(30) Priority: 27.09.2022 JP 2022153860; 13.03.2023 JP 2023038425
(71) Applicant: Sugino Machine Limited, Namerikawa City, Toyama 936-8577 (JP)
(72) Inventor: IHARA, Minoru, Namerikawa City, Toyama, 9368577 (JP); ISHIKAWA, Hitoshi, Takahama-shi, Aichi, 4441386 (JP); TAKATSU, Yu, Takahama-shi, Aichi, 4441386 (JP)
(74) Representative: Global IP Europe Patentanwaltskanzlei

(57) **Abstract**

Provided is a tool magazine capable of automatically exchanging a tool holder between the tool magazine and a spindle. A tool magazine (40) includes: a magazine body (41); an operation lever (55) disposed to the magazine body (41), the operation lever (55) reciprocable in the axial direction of the spindle (10) with the operation sleeve (23) in a supportable manner, the operation lever (55) including, an operation sleeve receiving hole (55a) configured to receive the operation lever (23), and a hook portion (56) disposed in the operation sleeve receiving hole (55a) to be hooked in the receiving portion (23b), an operation lever guide (64) configured to guide the operation lever (55) in the axial direction of the spindle (10); and an operation elastic body (58) configured to urge the operation lever (55) toward a basal end of the spindle (10) against an elastic force of the holder elastic body (27).

## Description

### BACKGROUND

### 1. Technical Field

The present invention relates to a tool holder, and a tool magazine capable of automatically exchanging a tool holder between the tool magazine and a spindle. 2. Description of the Background

A conventional tool holder (attaching/detaching member), to which a tool is attached, is attachable to a spindle (For example, JP-A-H06-134608, hereinafter, Patent Literature 1). According to Patent Literature 1, when the tool holder is attached to the spindle, the contact surface of the main body of the tool holder abuts against the receiving surface of the spindle, and the pulling claw of the engaging ring in the tool holder engages with the engaging portion of the spindle. In this state, the wedge member is pushed between the main body and the V-shaped receiving wall provided in a pair in the engagement ring, and the wedge member is prevented from escaping therefrom.

### BRIEF SUMMARY

As the conventional tool holder is manually exchanged by an operator, exchanging the tool holder in operation of the machine is dangerous. In addition, the tool holder cannot be exchanged unmanned, and the exchange time is long.

An object of the present invention is to provide a tool holder, and a tool magazine capable of automatically changing a tool holder between the tool magazine and a spindle.

A first aspect of the present invention provides a tool holder attachable to a spindle including a spindle bore, a circumferential groove located on an outer periphery of the spindle, and a drive slot connected to the circumferential groove, the tool holder including:
a tool body including a shank configured to be received in the spindle bore;
an operation sleeve disposed radially outside of the tool body, the operation sleeve configured to be urged toward a basal end of the spindle, the operation sleeve reciprocable along axial direction of the spindle, the operation sleeve including
a drive key configured to be received in the drive slot to transmit rotation of the spindle to the tool body, and
a receiving portion located on an outer periphery of the operation sleeve,
a holder elastic body configured to urge the operation sleeve toward the spindle with respect to the tool body; and
a hold ring disposed on the tool body, the hold ring including a hold claw configured to extend through the drive slot to be hooked on the circumferential groove.

A second aspect of the present invention provides a tool magazine configured to store the tool holder in an exchangeable manner to the spindle, the tool magazine including:
a magazine body;
an operation lever disposed to the magazine body, the operation lever reciprocable in the axial direction of the spindle with the operation sleeve in a supportable manner, the operation lever including,
an operation sleeve receiving hole configured to receive the operation lever, and
a hook portion disposed in the operation sleeve receiving hole to be hooked in the receiving portion,
an operation lever guide configured to guide the operation lever in the axial direction of the spindle; and
an operation elastic body configured to urge the operation lever toward a basal end of the spindle against an elastic force of the holder elastic body.

A tip tool is attached to the tool holder. The tip tool is, for example, a cutting tool or a brush.

Preferably, the operation sleeve is cylindrical.

The operation lever may have an operation sleeve hole for holding the tool holder. The operation sleeve hole may have an abutment cylindrical surface abutting the operation sleeve.

Preferably, the operation lever includes a plunger that presses the operation sleeve radially inwards. The plunger is arranged, for example, on the inner surfaces of the operation sleeve holes on both sides. Preferably, the plunger urges the operation sleeve towards the abutment cylindrical surface.

The hook portion (or the anti-rotation portion) hooks the receiving portion to suppress rotation of the operation sleeve and to hold the operation sleeve. The receiving portion and the hook portion are in a relationship such as a screw tightening portion and a wrench.

For example, the receiving portion is a groove having a rectangular cross section formed on the outer cylindrical surface of the operation sleeve. The bottom surface of the receiving portion is two planes parallel to each other. The receiving portions are arranged rotationally symmetrically with respect to the central axis of the shank. The receiving portion may be a regular hexagonal groove. In this case, the hook portion is a plate-like projection having two parallel planes which are thinner than the groove width of the receiving portion and abut against the receiving portion. The hook portion has a single open end spanner shape.

The receiving portion may be a cylindrical hole arranged in the radial direction. In this case, the hook is a cylindrical pin which abuts against the receiving portion. The hook portion has a hook pin shape of a hook spanner.

The receiving portion may be a square groove extending along the central axis of the shank. In this case, the hook portion is a protrusion that abuts on the corner groove.

The receiving portion may have a first receiving portion that is hooked in the axial direction and a second receiving portion that is hooked in the circumferential direction. For example, the first receiving portion is a circumferential groove and the second receiving portion is a hexagonal head. In this case, the hook portion has a first hook portion and a second hook portion. The first hook is hooked on the first receiving portion and restricts the axial movement of the operation sleeve. The second hook portion is hooked on the second receiving portion and restricts the rotational movement of the operation sleeve.

The tool magazine may have an operation lever stopper that holds the operation lever so as not come out of the magazine body. The operation lever stopper is disposed, for example, on the magazine body.

The push lever may have a push fork portion holding the tip tool. The push fork portion may have an abutment cylindrical surface abutting the tool body. The pressing portion abuts, for example, the distal end portion of the body. The pressing portion is, for example, plate shaped.

The operation lever guide, the push lever guide, and the inclination suppression guide are linear motion guides. For example, the operation lever guide, the push lever guide, and the inclination suppression guide are a shaft and a bush, a ball spline, and a linear guide. The operation lever guide guides the operation lever in the direction of the spindle when the spindle and the tool holder exchange the tool. The push lever guide guides the push lever in a direction of the spindle when the spindle and the tool holder exchange the tool. The inclination suppression guide guides the push lever in the direction of the spindle when the spindle and the tool holder exchange the tool.

The inclination suppression guide may be disposed on an opposite side of the operation lever guide with respect to the tool holder held by the tool magazine.

Preferably, the magazine body is mounted on a float base. The float base supports the magazine body so as to be freely movable in a first direction, which is a direction of the spindle in a state of transferring to the tool magazine, and in a second direction and a third direction, which are perpendicular to each other in the first direction. The float base may have an elastic body. The float base supports the magazine body, for example, so as to have play in the second direction and the third direction. The float base may include a first elastic body. The elastic body applies an elastic force to the magazine body along the second direction and the third direction. The float base may support the magazine body so as to have play in the first direction. The float base may include a second elastic body. The second elastic body applies an elastic force to the magazine body along the first direction.

The operation sleeve receiving hole may have an opening in the receiving direction.

The protrusion may be rigid. The rigid protrusion is made of, for example, a metal, a general-purpose resin, or an engineering plastic. The protrusion, which is rigid, has an abutment surface that is inclined with respect to the direction of receiving the operation sleeve with respect to the sleeve receiving hole. The abutment surface approaches the left and right ends of the operation lever as it goes in the receiving direction. The abutment surface of the pinch lever urges the contact portion with the outer circumferential cylindrical surface of the operation sleeve. Due to the resultant force of the urging force by the protrusions of the pair of pinch levers, the protrusion urges the operation sleeve toward the sleeve abutment surface.

The protrusion may be an elastic body. The protrusion which is an elastic body is, for example, a leaf spring or a plunger. The protrusion, which is an elastic body, urges the operation sleeve under the elastic force of the protrusion toward the sleeve abutment surface.

The over travel detection switch may be disposed on the magazine body. In this case, the distal dog and the basal dog are arranged on the push lever.

The tool holder and the tool magazine according to the present invention enables automatically exchange the tool holder between the tool magazine and the spindle.

### BRIEF DESCRIPTION OF DRAWINGS

FIG. 1 is a perspective view of a spindle according to a first embodiment.
FIG. 2 is a half sectional view of the spindle according to the first embodiment.
FIG. 3 is a perspective view of a tool holder according to the first embodiment.
FIG. 4 is a half sectional view of the tool holder according to the first embodiment.
FIG. 5 is a perspective view of a tool magazine according to the first embodiment.
FIG. 6 is a plan view of the tool magazine according to the first embodiment.
FIG. 7 is a cross-sectional view taken along line VII-VII in FIG. 6.
FIG. 8A is an explanatory drawing of transferring the tool holder from the spindle to the tool magazine according to the first embodiment.
FIG. 8B is an explanatory drawing of transferring the tool holder from the spindle to the tool magazine according to the first embodiment.
FIG. 8C is an explanatory drawing of transferring the tool holder from the spindle to the tool magazine according to the first embodiment.
FIG. 8D is an explanatory drawing of transferring the tool holder from the spindle to the tool magazine according to the first embodiment.
FIG. 8E is an explanatory drawing of transferring the tool holder from the spindle to the tool magazine according to the first embodiment.
FIG. 8F is an explanatory drawing of transferring the tool holder from the spindle to the tool magazine according to the first embodiment.
FIG. 9A is an explanatory drawing of transferring the tool holder from the tool magazine to the spindle according to the first embodiment.
FIG. 9B is an explanatory drawing of transferring the tool holder from the tool magazine to the spindle according to the first embodiment.
FIG. 9C is an explanatory drawing of transferring the tool holder from the tool magazine to the spindle according to the first embodiment.
FIG. 9D is an explanatory drawing of transferring the tool holder from the tool magazine to the spindle according to the first embodiment.
FIG. 9E is an explanatory drawing of transferring the tool holder from the tool magazine to the spindle according to the first embodiment.
FIG. 10 is a perspective view of a tool magazine according to a second embodiment.
FIG. 11 is a plan view of the tool magazine according to the second embodiment.
FIG. 12 is a combined cross-sectional view taken along line XII-XII in FIG. 11.
FIG. 13A is an explanatory drawing of transferring the tool holder from the spindle to the tool magazine according to the second embodiment.
FIG. 13B is an explanatory drawing of transferring the tool holder from the spindle to the tool magazine according to the second embodiment.
FIG. 14 is a perspective view of a pinch arm according to a third embodiment.
FIG.15 is a perspective view of a pinch arm according to a fourth embodiment.

### DETAILED DESCRIPTION

### First Embodiment

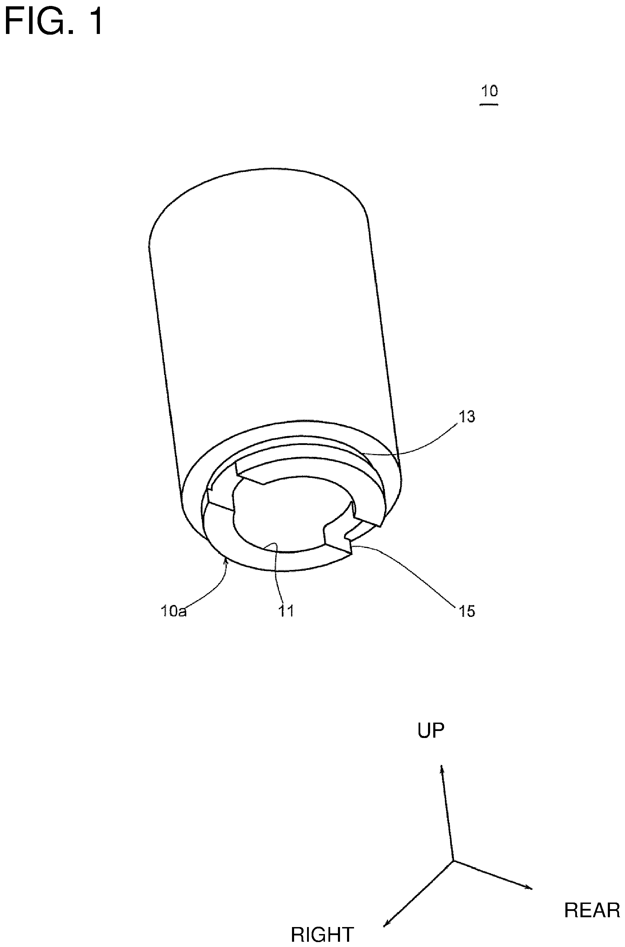

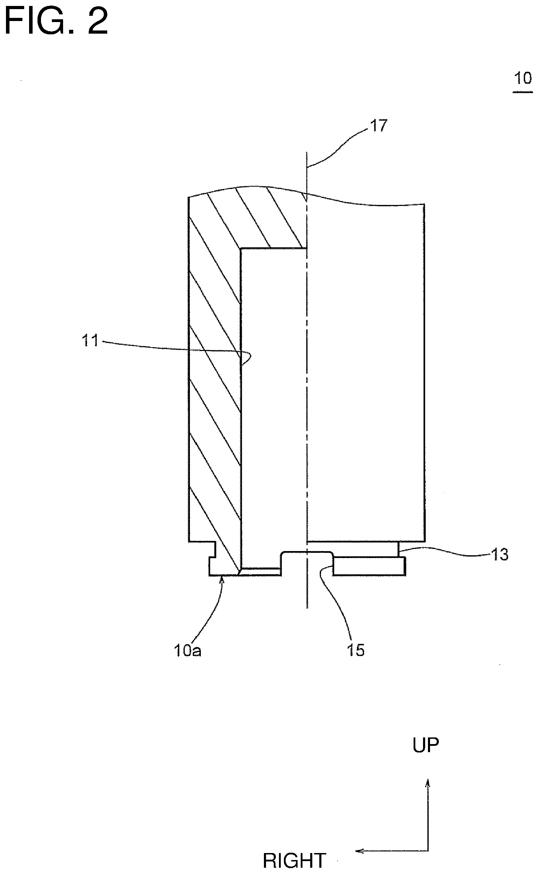

As shown in FIGs. 1 and 2, a spindle 10 according to the present embodiment has an end face 10a, a spindle bore 11, a circumferential groove 13, and a drive slot 15. The spindle bore 11 is, for example, a straight shank bore. The circumferential groove 13 has a rectangular cross-section. The circumferential groove 13 extends circumferentially around the spindle 10 in the vicinity of the end face 10a. For example, the spindle 10 has two drive slots 15 arranged symmetrically to a central axis 17 of the spindle 10. The drive slot 15 has a rectangular cross section. The drive slot 15 extends from the end face 10a to the circumferential groove 13.

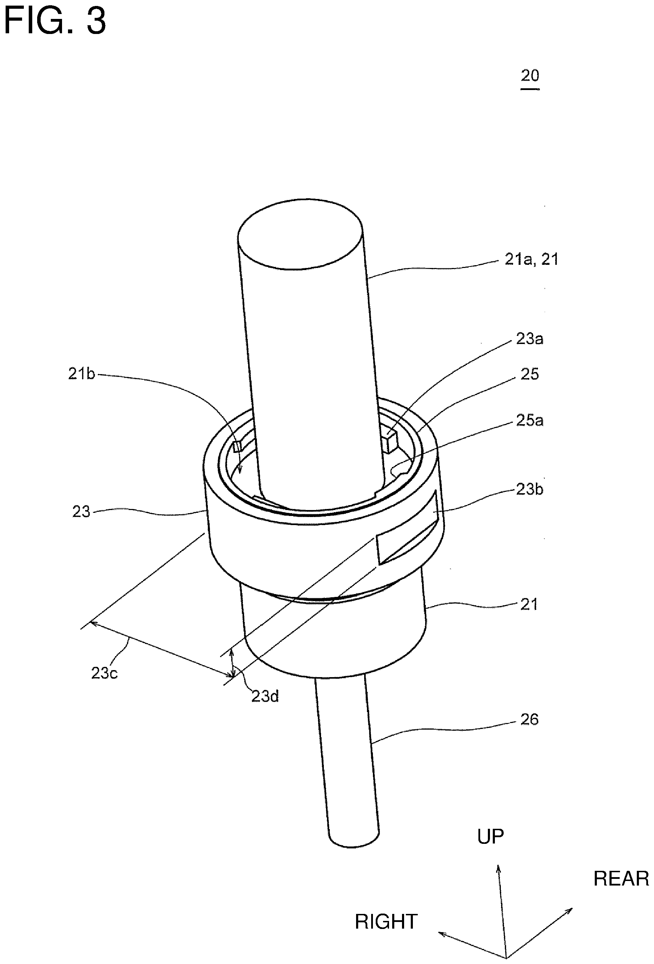

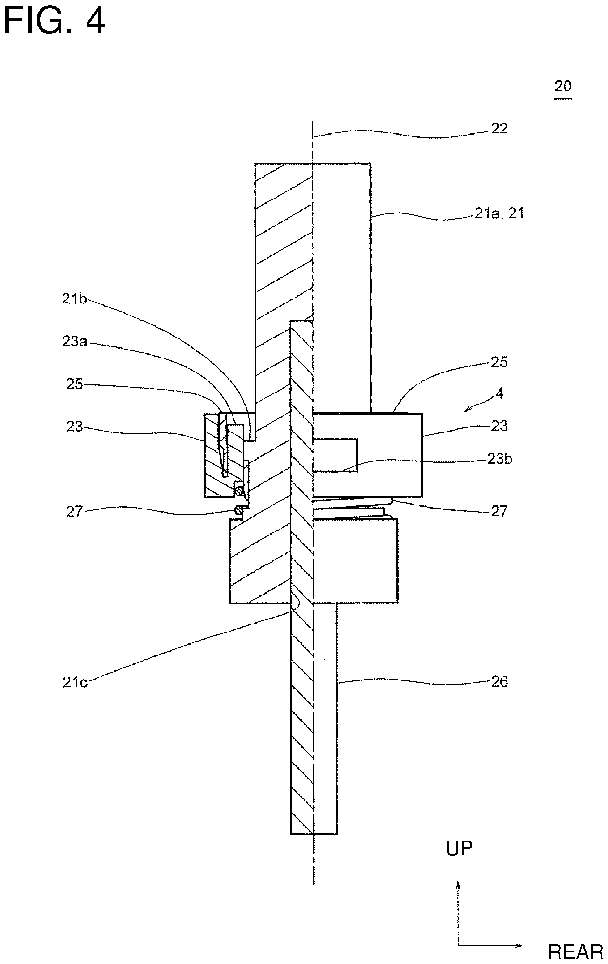

As shown in FIGs. 3 and 4, a tool holder 20 according to the present embodiment includes a tool body 21, a hold ring 25, an operation sleeve 23, and a holder spring (holder elastic body) 27. A cutting tool 26 is attached to the tool holder 20.

The tool body 21 has a stepped cylindrical shape. The tool body 21 includes a shank 21a, an end face 21b, and a tool bore 21c. The shank 21a is, for example, a straight shank. The cutting tool 26 is attached to the tool bore 21c by, for example, collet (not shown) or shrink fit.

The holder spring 27 is a compression coil spring. The holder spring 27 is attached to the tool body 21. The holder spring 27 urges the hold ring 25 and the operation sleeve 23 toward basal end (upward in FIG. 4) of the spindle 10.

The hold ring 25 has a hollow cylindrical shape. The hold ring 25 is disposed on the outer peripheral side of the tool body 21. The hold ring 25 is reciprocable with respect to the tool body 21 in the direction of a central axis 22 of the tool body 21. The hold ring 25 has a plurality (two in FIG. 3) of hold claws 25a. The hold claws 25a are symmetrically arranged with respect to the central axis 22. The hold claw 25a passes through the drive slot 15 to be hooked on the circumferential groove 13.

The operation sleeve 23 has a hollow ring shape. The operation sleeve 23 includes a drive key 23a and a receiving portion 23b. The operation sleeve 23 is reciprocable in the direction of the central axis 22.

The drive key 23a is fit into the drive slot 15. The drive key 23a is in a position rotated 90 degrees from the hold claw 25a.

The receiving portion 23b is a groove having a rectangular cross section formed on the outer peripheral surface of the operation sleeve 23. For example, when viewed from the central axis 22, the receiving portion 23b extends perpendicularly to the line connecting the centers of the two hold claws 25a. The bottom surfaces of the receiving portion 23b are two planes which are parallel to each other. The receiving portions 23b are arranged rotationally symmetrically on the central axis 22. The receiving portion 23b has a surface width 23c and a height 23d.

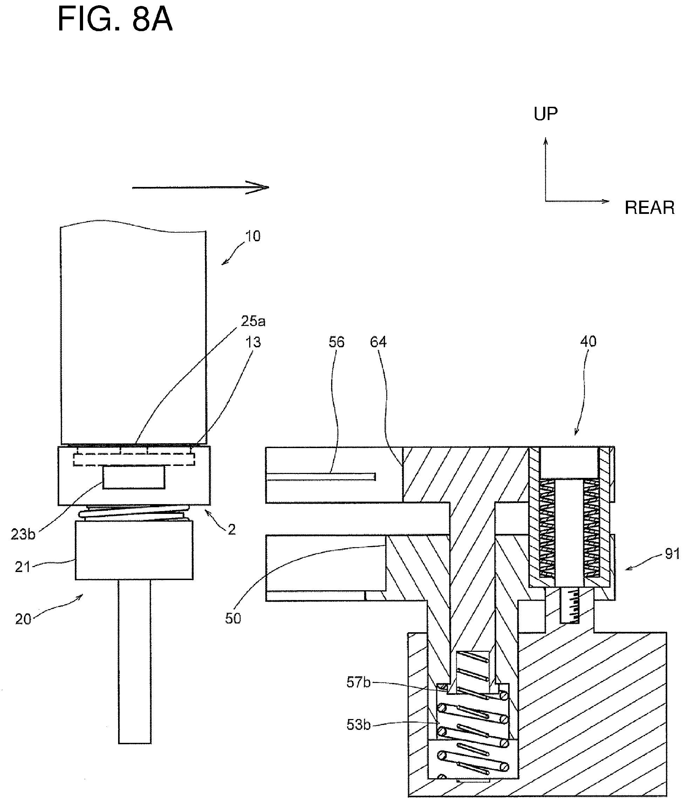

When the tool holder 20 is mounted on the spindle 10, the holder spring 27 pushes the hold ring 25. The hold ring 25 moves to the locked position 2 (see FIG. 8A). At this time, the hold claw 25a of the hold ring 25 comes into contact with the circumferential groove 13 of the spindle 10 and pulls the spindle 10 toward the distal end (downward in FIG. 8A). The tool holder 20 is thus fixed to the spindle 10 (see FIG. 8A). At this time, the drive key 23a is fitted into the drive slot 15 of the spindle 10 to transmit the rotation or torque of the spindle 10 to the tool body 21.

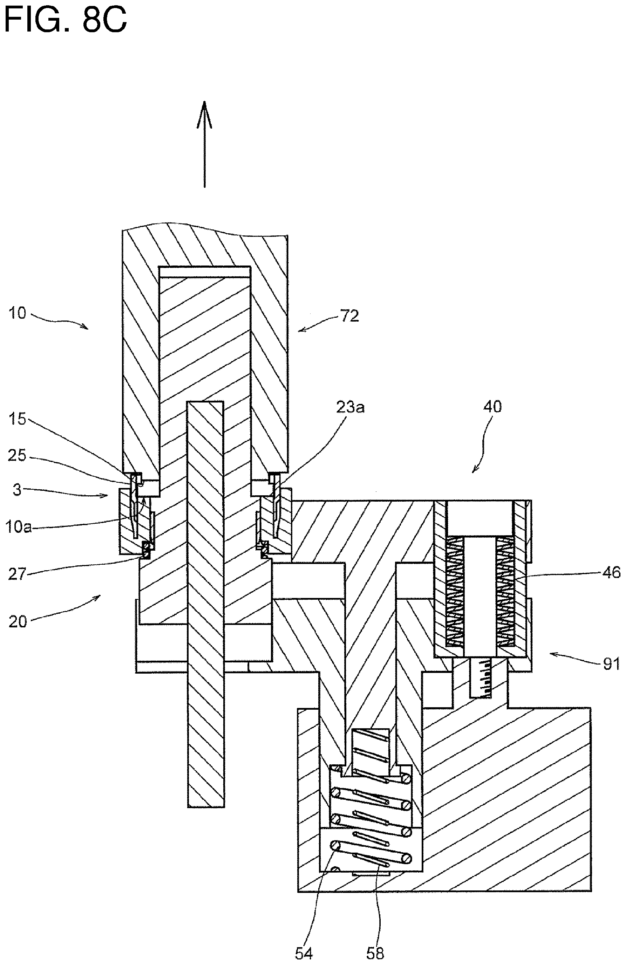

While the tool holder 20 is removed from the spindle 10, the operation sleeve 23 moves toward the distal end (downward in FIG. 4). Then, the hold ring 25 does not receive the elastic force of the holder spring 27, and the hold ring 25 is separated from the circumferential groove 13. As the operation sleeve 23 moves, the drive key 23a moves to the end face 21b (see FIG. 8C). When the spindle 10 is rotated by 90 degrees, the hold claw 25a passes through the drive slot 15, and the tool holder 20 is removed from the spindle 10.

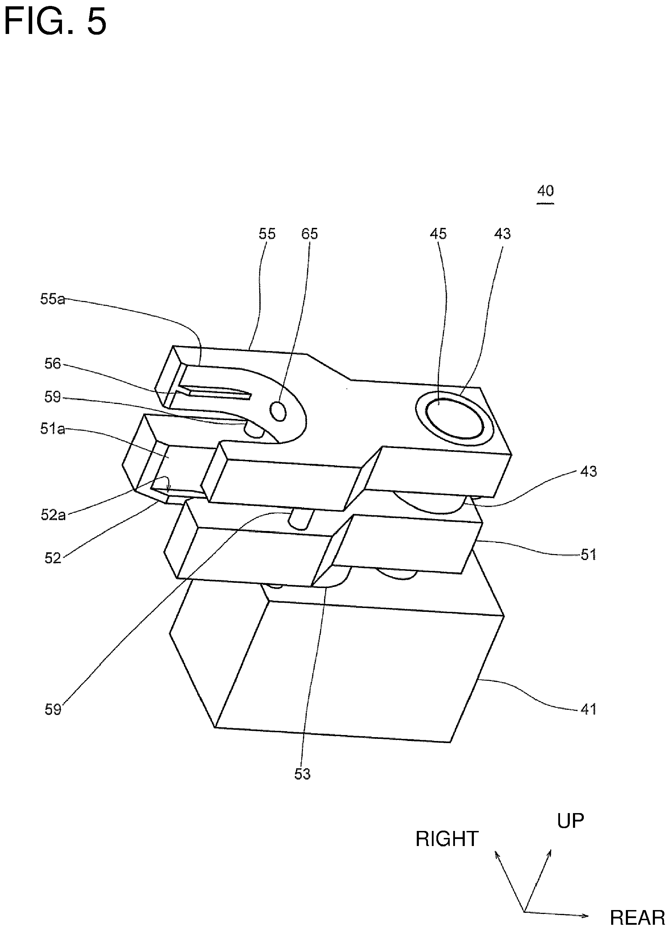

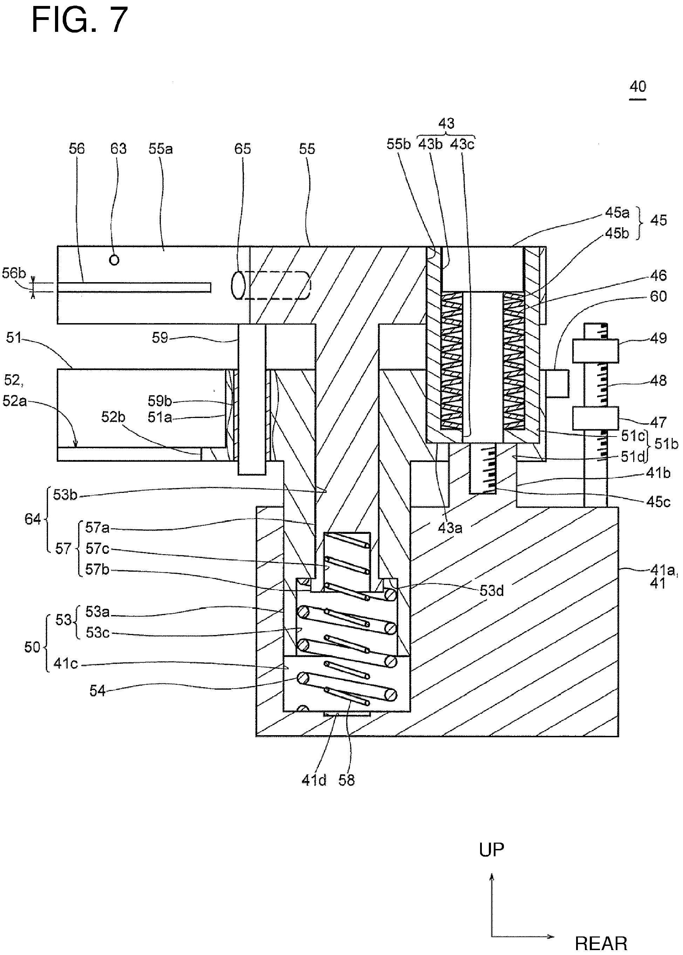

As shown in FIGs. 5 to 7, the tool magazine 40 according to the present embodiment includes a magazine body 41, an operation lever 55, an operation lever guide 64, an operation spring (operation elastic body) 58, and a hook portion 56. The tool magazine 40 may include a push lever 51, a push lever guide 50, an anti-push spring (anti-push elastic body) 54, a spring post 45, an anti-pull spring (anti-pull elastic body) 46, an inclination suppression guide 59, a pull-up spring cover 43, a tool holder detection switch 65, an over travel detection switch 60, a distal dog 47, a basal dog 49, a dog stem 48, and a distal stopper 41b. The operation lever guide 64 has an operation lever guide bore 53b and an operation lever stem 57. The push lever guide 50 includes a push lever guide bore 41c and a push lever stem 53.

Hereinafter, for convenience, when exchanging the tool holder 20 between the tool magazine 40 and the spindle 10, along the central axis 17 of the spindle 10 and the central axis 22 of the tool holder 20, the direction of the spindle 10 away from the tool holder 20 is referred to as up, the direction of the spindle 10, to which the tool holder 20 is mounted, inserted into the tool holder 20 is referred to as rear, and the right direction as viewed from the rear toward the front is referred to as right.

The magazine body 41 includes a body main body 41a, the distal stopper 41b, the push lever guide bore 41c, and a second operation spring guide 41d. The distal stopper 41b is disposed at a rear portion of the body main body 41a. The distal stopper 41b protrudes from the upper surface of the body main body 41a. The push lever guide bore 41c is a bottomed cylindrical bore. The push lever guide bore 41c extends vertically and is disposed at a front portion of the body main body 41a. The push lever guide bore 41c opens toward the upper surface of the body main body 41a. The second operation spring guide 41d is, for example, a bottomed bore or a cylindrical guide. The second operation spring guide 41d is located on the bottom surface of the push lever guide bore 41c.

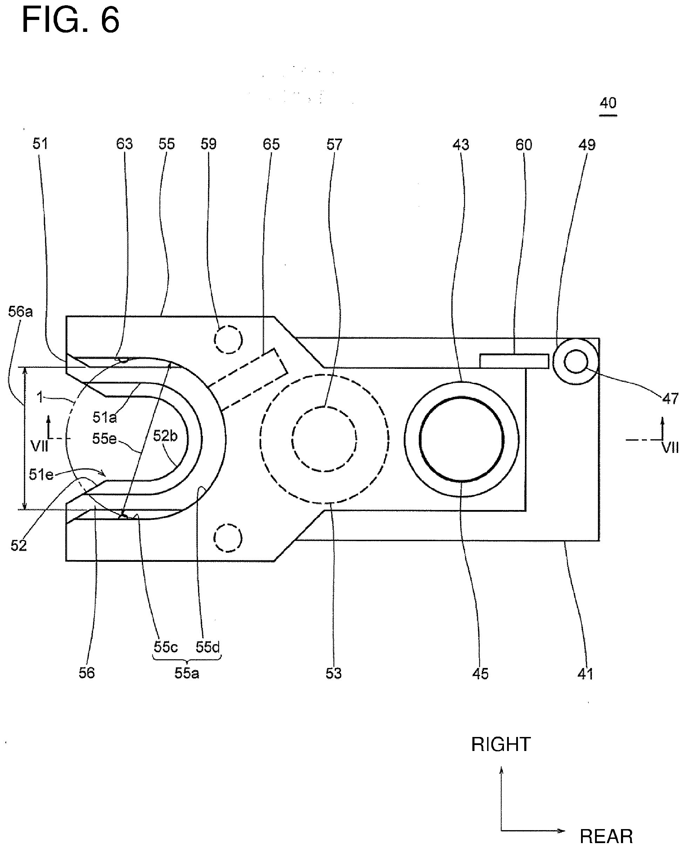

The push lever 51 extends in the front-rear direction. The push lever 51 includes a tool body receiving hole 51a and a push plate (pushing portion) 52. The push lever 51 may include a guide bush 59b and a spring post receiving bore 51b. The distal end portion of the tool body 21 is received into the tool body receiving hole 51a from the front toward the rear. The tool body receiving hole 51a is located at a front end portion of the push lever 51. The tool body receiving hole 51a may open forward of the push lever 51. At this time, the distal end portion (push fork portion) 51e of the push lever 51 (see FIG. 6) is fork-shaped. The distal ends 51e holds the cutting tool 26. The push plate 52 is disposed at a lower portion of the tool body receiving hole 51a. The push plate 52 includes an abutment surface (pressing portion) 52a and a tool passage hole 52b. The abutment surface 52a abuts the tool body 21. When the distal end portion of the tool body 21 abuts against the abutment surface 52a and moves downward, the push plate 52 moves together with the tool body 21. The cutting tool 26 passes through the tool passage hole 52b. The spring post receiving bore 51b is located at a rear end portion of the push lever 51. The spring post receiving bore 51b is a stepped cylindrical bore extending vertically. The spring post receiving bore 5 1b has an upper large-diameter portion 51c and a lower small-diameter portion 51d.

The push lever stem (push shaft) 53, which is disposed below the push lever 51, extends vertically. The push lever stem 53 has an outer cylindrical surface 53a, the operation lever guide bore 53b, and an anti-push spring guide bore 53c. The outer cylindrical surface 53a slides in the push lever guide bore 41c to guide the push lever 51 vertically. The operation lever guide bore 53b extends vertically and passes through the push lever stem 53 and the push lever 51. The anti-push spring guide bore 53c is connected to the lower end of the operation lever guide bore 53b. The inner diameter of the anti-push spring guide bore 53c is larger than the inner diameter of the operation lever guide bore 53b. The end face of the anti-push spring guide bore 53c is an operation lever stopper 53d.

The operation lever 55 extends in the front-rear direction. The operation lever 55 includes an operation sleeve receiving hole 55a, the hook portion 56, and a spring post passing hole 55b. The operation sleeve receiving hole 55a is located at a front end portion of the operation lever 55. The operation sleeve receiving hole 55a, which has an elongated hole shape extending in the front-rear direction, has a diameter 55e substantially the same as the diameter of the operation sleeve 23. The operation sleeve receiving hole 55a includes a guide portion 55c and a sleeve abutment surface 55d. The guide portion 55c guides the operation sleeve 23 when the operation sleeve 23 is received. The guide portion 55c may have, for example, an inclined surface for guiding. The sleeve abutment surface 55d abuts against the outer cylindrical surface of the operation sleeve 23 of the tool holder 20 located at an exchange position 1. The operation sleeve receiving hole 55a may be opened in front of the operation lever 55. The hook portion 56 is disposed on the left and right inner surfaces of the operation sleeve receiving hole 55a. The hook portion 56, which is a flat plate, extends in the front-rear direction. The end face of the hook portion 56 is two parallel planes. The surface width 56a of the hook portion 56 is substantially equal to the surface width 23c of the receiving portion 23b. The thickness 56b of the hook portion 56 is smaller than the height 23d of the receiving portion 23b. The spring post passing hole 55b is located at a rear end portion of the operation lever 55.

The tool holder detection switch 65 is disposed in the operation sleeve receiving hole 55a. When the tool holder 20 is attached to the operation lever 55, the tool holder detection switch 65 detects the tool holder 20. For example, the tool holder detection switch 65 is a proximity switch.

The tool holder detection switch 65 may be disposed in the tool body receiving hole 51a of the push lever 51.

The plunger 63 is disposed in the operation sleeve receiving hole 55a. For example, the plunger 63 is a ball plunger. The plunger 63 is arranged slightly forward from the central axis 22 of the tool holder 20 at the exchange position 1. The plunger 63 pushes the operation sleeve 23 received in the operation sleeve receiving hole 55a toward the center. The plunger 63 thus urges the operation sleeve 23 rearward to bring the operation sleeve 23 into contact with the sleeve abutment surface 55d.

The plunger 63 may have a cylindrical shape extending in the vertical direction.

The operation lever stem 57, which is disposed below the operation lever 55, extends vertically. The operation lever stem 57 has an outer cylindrical surface 57a, a first operation spring guide 57c, and a stopper ring 57b. The outer cylindrical surface 57a is a cylindrical surface. The outer cylindrical surface 57a slides in the operation lever guide bore 53b to guide the operation lever 55 vertically. The first operation spring guide 57c is a bottomed cylindrical bore. The first operation spring guide 57c is located at the lower end of the operation lever stem 57. The stopper ring 57b is disposed at a lower end portion of the operation lever stem 57. The stopper ring 57b is caught by the operation lever stopper 53d to prevent the operation lever stem 57 from coming out upward.

The operation spring 58 is a compression coil spring. The operation spring 58 is disposed inside the push lever guide bore 41c. The operation spring 58 is guided by the first operation spring guide 57c and the second operation spring guide 41d. The operation spring 58 urges the operation lever 55 upward. Preferably, the spring load of the operation spring 58 at the time of attachment is smaller than the spring load of the holder spring 27 at the time of attachment.

The anti-push spring 54 is a compression coil spring. The inner diameter of the anti-push spring 54 is larger than the outer diameter of the stopper ring 57b. The anti-push spring 54 is disposed inside the push lever guide bore 41c and the anti-push spring guide bore 53c. The anti-push spring 54 is guided in the anti-push spring guide bore 53c. The spring load of the anti-push spring 54 at the time of attachment is larger than the spring load of the holder spring 27 at the time of contraction.

The inclination suppression guide 59 extends downward from the operation lever 55. In a plan view, the inclination suppression guide 59 is disposed in the vicinity of the operation sleeve receiving hole 55a. The inclination suppression guide 59 slides in the guide bush 59b. The inclination suppression guide 59 suppresses the operation lever 55 from inclining when the operation lever 55 is pushed downward by the spindle 10.

In a plan view, the inclination suppression guide 59 may be disposed on the opposite side of the operation lever stem 57 with respect to the operation sleeve receiving hole 55a.

The spring post 45 includes a post head 45a, an anti-pull spring guide 45b, and an external thread 45c. The post head 45a is disposed at the upper end of the spring post 45. The diameter of the post head 45a is larger than the diameter of the anti-pull spring guide 45b. The external thread 45c is disposed at the lower end of the spring post 45 to be fastened to the distal stopper 41b. The spring post 45 passes through the spring post receiving bore 51b.

The pull-up spring cover 43 is disposed above the distal stopper 41b and the spring post receiving bore 51b. The pull-up spring cover 43 has a hollow cylindrical shape. The pull-up spring cover 43 has a push lever stopper 43a and a hollow cylinder bore 43b. The push lever stopper 43a has a through-hole 43c. The anti-pull spring guide 45b passes through the through-hole 43c. The distal stopper 41b does not pass through the through-hole 43c. The pull-up spring cover 43 is received in the spring post receiving bore 51b. The pull-up spring cover 43 extends along the spring post 45. The pull-up spring cover 43 slides with the spring post passing hole 55b.

For example, the anti-pull spring 46 is a disc spring. The anti-pull spring 46 is disposed inside the pull-up spring cover 43. The anti-pull spring guide 45b passes through the anti-pull spring 46 to guide the anti-pull spring 46. The anti-pull spring 46 is disposed between the post head 45a and the push lever stopper 43a. When the push lever 51 is pulled upward from the initial position 3, the anti-pull spring 46 urges the push lever 51 downward via the pull-up spring cover 43.

The dog stem 48 is, for example, an implantable bolt. The dog stem 48 is disposed at a rear end portion of the body main body 41a. The dog stem 48 extends upward from the body main body 41a. The distal dog 47 and the basal dog 49 are fixed to the dog stem 48.

The over travel detection switch 60 is, for example, a proximity switch. The over travel detection switch 60 is disposed at a rear end portion of the push lever 51.

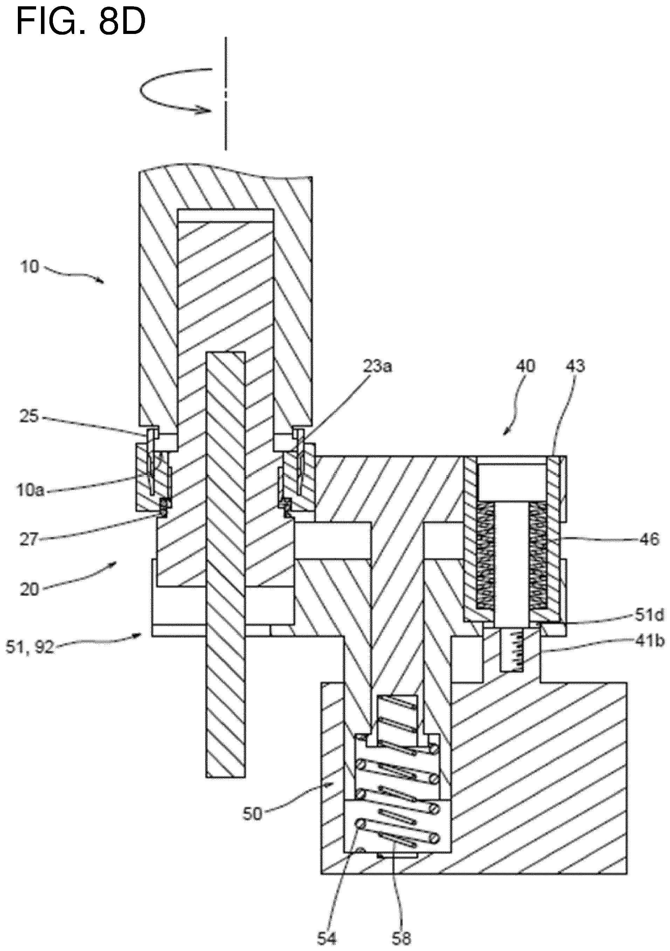

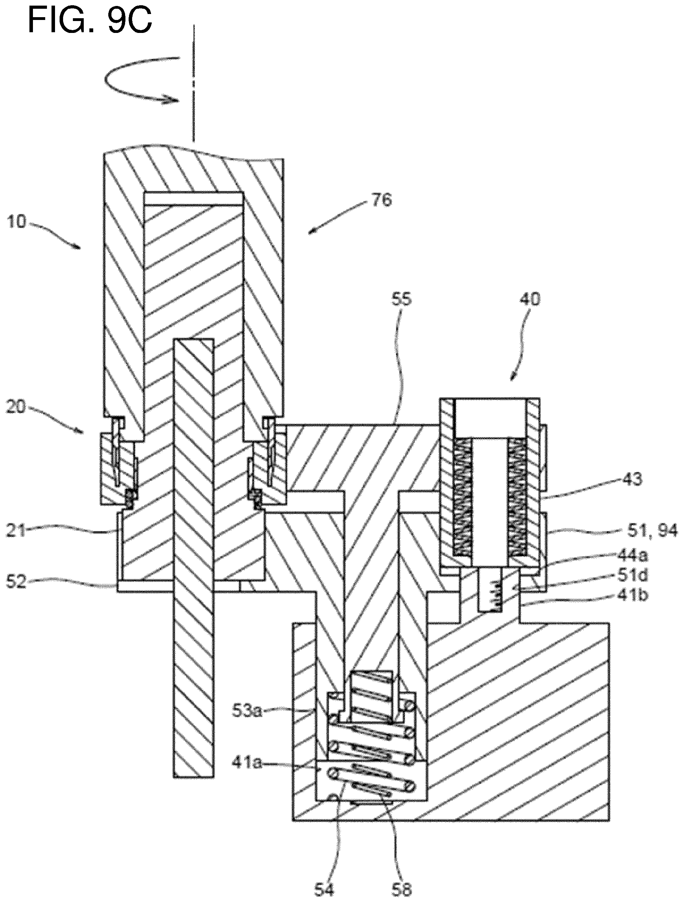

When the push lever 51 is raised and exceeds the basal end 92 of the stroke (see FIG. 8D), the over travel detection switch 60 detects the basal dog 49. When the push lever 51 descends and exceeds the stroke end 94 (see FIG. 9C), the over travel detection switch 60 detects the distal dog 47.

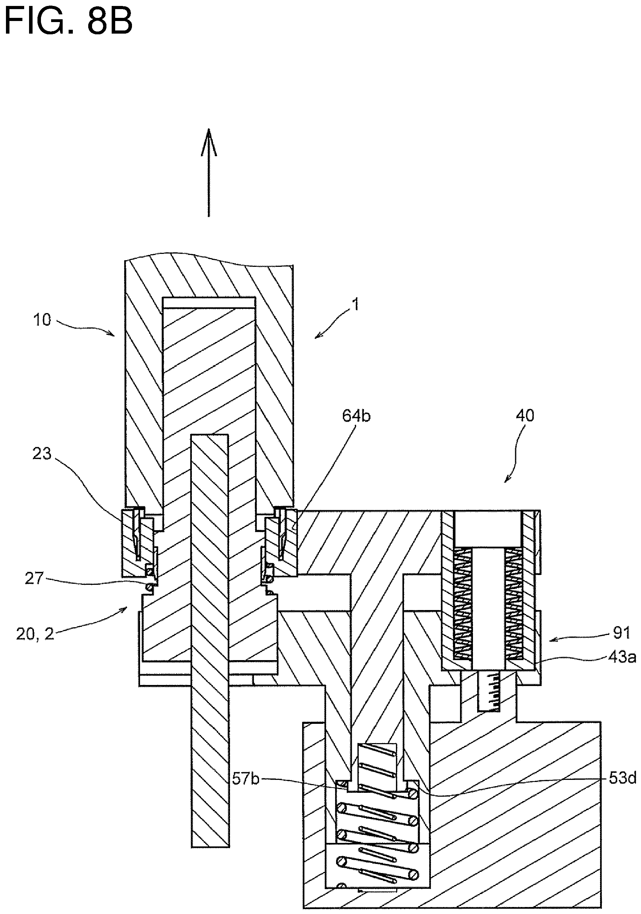

Referring to FIGs. 8A to 8F, a method of transferring the tool holder 20 from the spindle 10 to the tool magazine 40 will be described. FIGs. 8A to 8F are cut views of the tool magazines 40 in the front-rear and up-down planes passing through the center of the operation sleeve receiving hole 55a. FIG. 8A shows a state just before the spindle 10 to which the tool holder 20 is attached is moved to the exchange position 1. The spindle 10 rotates so that the hook portion 56 is received into the receiving portion 23b. In FIG. 8A, the spindle 10 rotates so that the bottom surface of the receiving portion 23b faces in the front-rear direction. Next, the height of the receiving portion 23b is aligned with the height of the hook portion 56 (see FIG. 8A). Next, the spindle 10 moves rearward, and the tool holder 20 reaches the exchange position 1 (see FIG. 8B). At this time, the operation lever 55 is positioned at the initial position. The push lever 51 is positioned at the initial position 91.

The spindle 10 is pulled upward from the state shown in FIG. 8B. The receiving portion 23b of the tool holder 20 is hooked on the hook portion 56. Further, the stopper ring 57b is hooked on the operation lever stopper 53d. The distance between the operation lever 55 and the push lever 51 is thus maintained. Further, the push lever 51 is urged downward by the anti-pull spring 46 via the push lever stopper 43a. Here, the elastic force of the anti-pull spring 46 is larger than the elastic force of the holder spring 27. The positions of the operation lever 55 and the push lever 51 are thus maintained. Then, the upward movement of the operation sleeve 23 of the tool holder 20 is restricted, and the holder spring 27 contracts. When the spindle 10 moves upward, the positions of the spindle 10 and the operation sleeve 23 are separated from each other. Here, as the hold claw 25a is caught in the circumferential groove 13, the hold ring 25 is pulled out from the operation sleeve 23. As shown in FIG. 8C, when the spindle 10 reaches a rotatable position 72, the drive key 23a comes out of the end face 10a. When the spindle 10 reaches the rotatable position 72, the spindle 10 can rotate 90 degrees.

The spindle 10 may be pulled further upward from the rotatable position 72. FIG. 8D shows that the spindle 10 has been pulled up to the upper end 73 and the push lever 51 has reached the basal end 92 of the stroke. At this time, the spindle 10, the tool holder 20, the operation lever 55, and the push lever 51 are integrally lifted upward against the elastic force of the anti-pull spring 46. At this time, the operation lever 55 and the push lever 51 are guided by the push lever guide 50. The small-diameter portion 51d may be guided by the outer cylindrical surface of the distal stopper 41b.

For example, the length of the tool body 21 of the tool holder 20 may vary greatly due to the tool holder 20 which is collet fastener. In this case, the tool holder 20 can be more reliably delivered by pulling the spindle 10 slightly more excessively than the rotatable position 72.

Then, the spindle 10 is rotated by 90 degrees. The position of the hold claw 25a then overlaps with the drive slot 15. The drive slot 15 is connected to the circumferential groove and vertically connected to the end face 10a. The hold claw 95a thus passes through the drive slot 15 and to downward of the spindle 10. At the same time, the restoring force of the holder spring 27 causes the operation sleeve 23 to move upward with respect to the tool body 21 and return to a release position 4. The tool holder 20 is then removed from the spindle 10 and supported by the tool magazine 40.

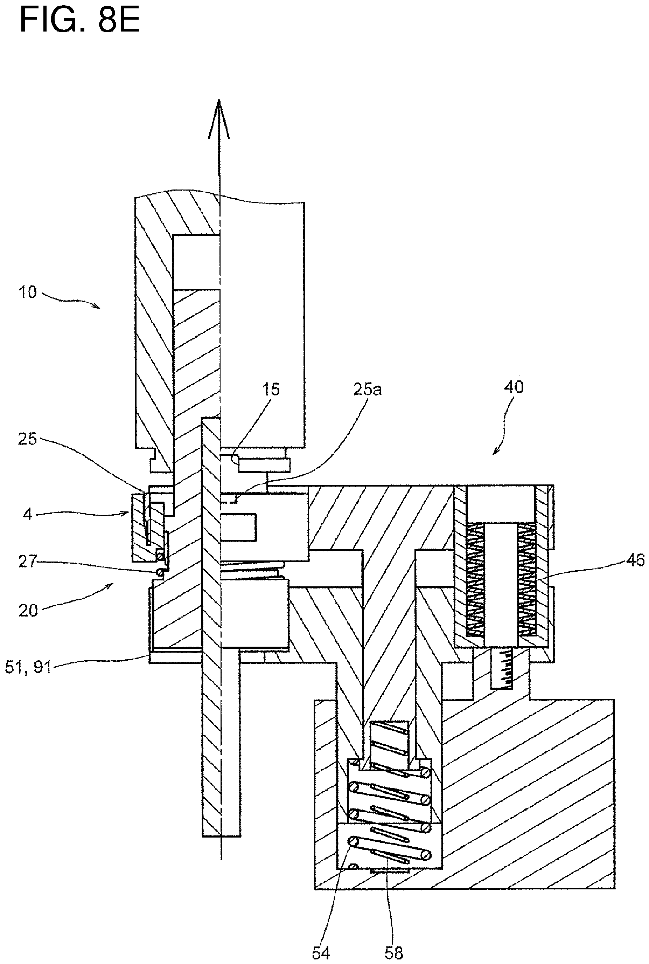

In case the spindle 10 is moved upward to the upper end 73, the operation lever 55 and the push lever 51 return to the initial position 91 by the restoring force of the anti-pull spring 46 as the spindle 10 rotates (see FIG. 8E).

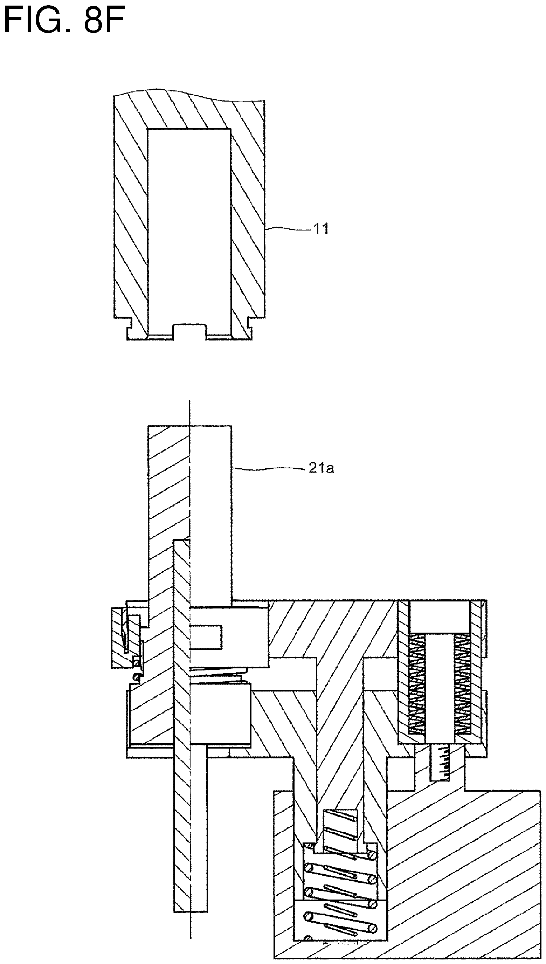

Then, the spindle 10 is pulled up until the shank 21a of the tool holder 20 comes out of the spindle bore 11 (see FIG. 8F). This completes the transfer of the tool holder 20 from the spindle 10 to the tool magazine 40.

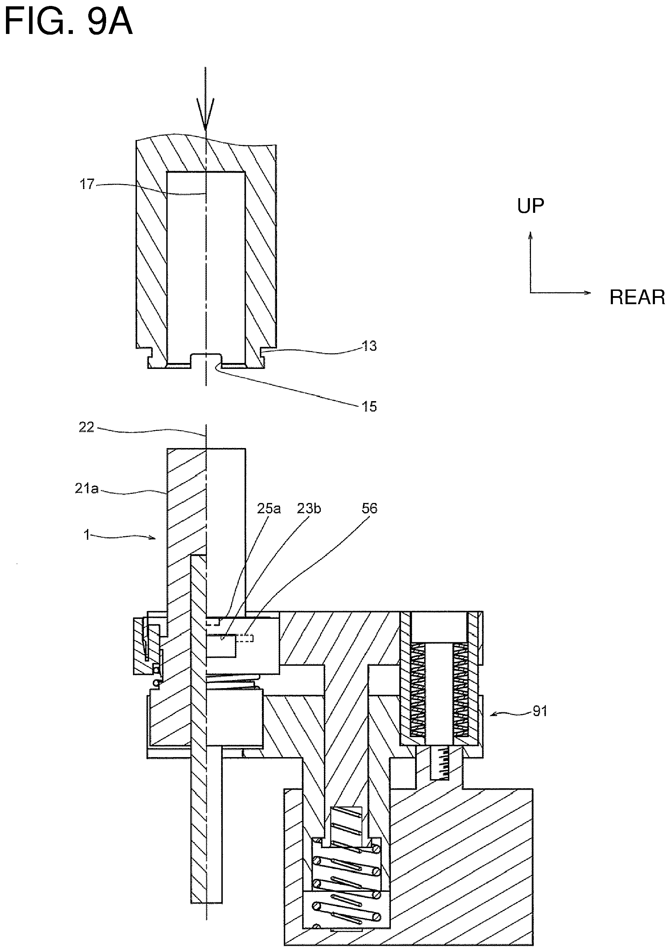

Referring to FIGs. 9A to 9E, the transferring the tool holder 20 from the tool magazine 40 to the spindle 10 will be described. Here, FIGs. 9A to 9E are cut views of the tool magazines 40 in the front-rear and up-down planes passing through the center of the operation sleeve receiving hole 55a. First, the central axis 17 of the spindle 10 is aligned with the central axis 22 of the tool holder 20 housed in the tool magazine 40. Then, the spindle 10 is rotated to align the position of the drive slot 15 with the hold claw 25a (FIG. 9A). Then, the spindle 10 is moved downward.

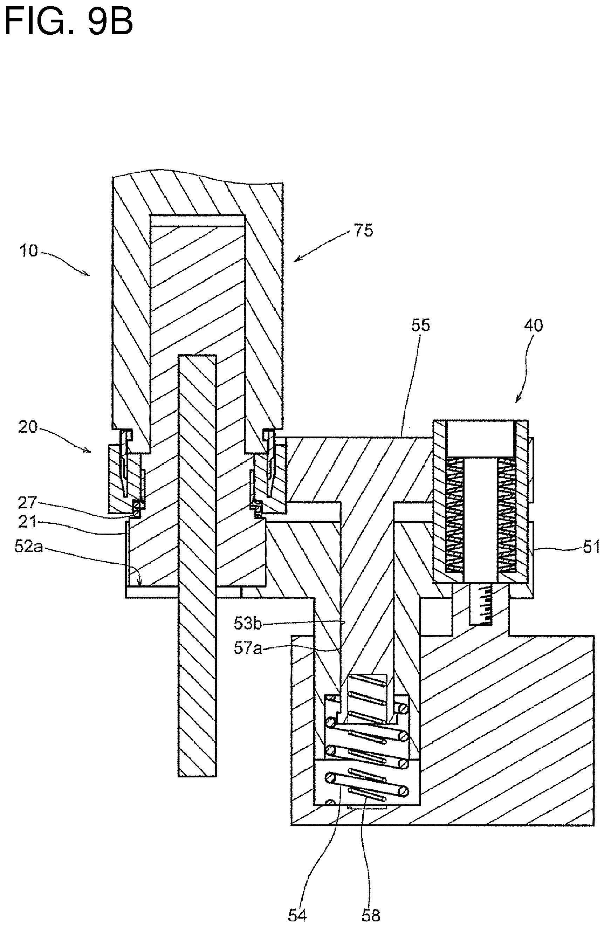

As shown in FIG. 9B, when the spindle 10 is moved downward along the central axis 17, the shank 21a is received in the spindle bore 11. The end face 10a of the spindle 10 abuts against the drive key 23a. At this time, the distal end surface of the tool body 21 is spaced upward from the abutment surface 52a.

When the spindle 10 is further lowered, the operation spring 58 starts to contract, and the operation lever 55 is lowered. Then, the distal end of the tool body 21 comes into contact with the abutment surface 52a.

When the spindle 10 is further lowered, the holder spring 27 contracts, and the end face 10a abuts against the end face 21b. The drive key 23a then reaches the end face 21b. At this time, the hold claw 25a passes through the drive slot 15 and reaches the circumferential groove 13. This position is the rotatable position 75. When the spindle 10 reaches the rotatable position 75, the spindle 10 can rotate.

As the spring load of the anti-push spring 54 is stronger than the spring load of the holder spring 27, the push lever 51 does not move at this time.

The spindle 10 may be further depressed beyond the rotatable position 75. FIG. 9C shows a state in which the spindle 10 is pushed down to the lower end 76, and the push lever 51 reaches the end 94 of stroke. When the spindle 10 is further depressed from the rotatable position 75, the tool holder 20, the operation lever 55, and the push lever 51 are integrally lowered. The operation lever 55 is guided by the operation lever guide 64. The spindle 10 is lowered against the elastic force of the holder spring 27, the operation spring 58, and the anti-push spring 54. During this time, the spindle 10 remains rotatable. At this time, the distal stopper 41b may guide the small-diameter portion 51d.

For example, the operation sleeve 23 is loosely fitted to the tool body 21. Thus, the position of the operation sleeve 23 with respect to the tool body 21 may vary. At this time, the tool holder 20 can be reliably transferred by slightly depressing the spindle 10 from the rotatable position 75.

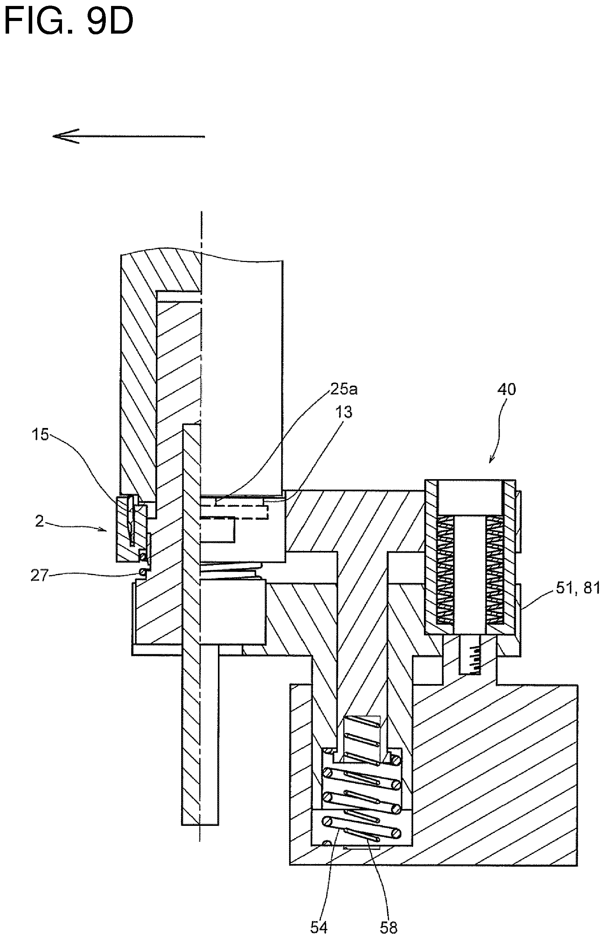

Next, the spindle 10 is rotated by 90 degrees. The position of the drive key 23a thus matches the drive slot 15. As the spindle 10 rotates, the hold claw 25a slides circumferentially through the circumferential groove 13. The restoring force of the holder spring 27 pushes the operation sleeve 23 upward against the tool body 21. Then, the drive key 23a is fitted into the drive slot 15. Then, the hold ring 25 moves to the locked position 2. At this time, the hold claw 25a urges the circumferential groove 13 downward so that the tool holder 20 is locked to the spindle 10. The operation lever 55 moves upward with respect to the push lever 51 by the movement amount of the operation sleeve 23 under the restoring force of the operation spring 58 (see FIG. 9D).

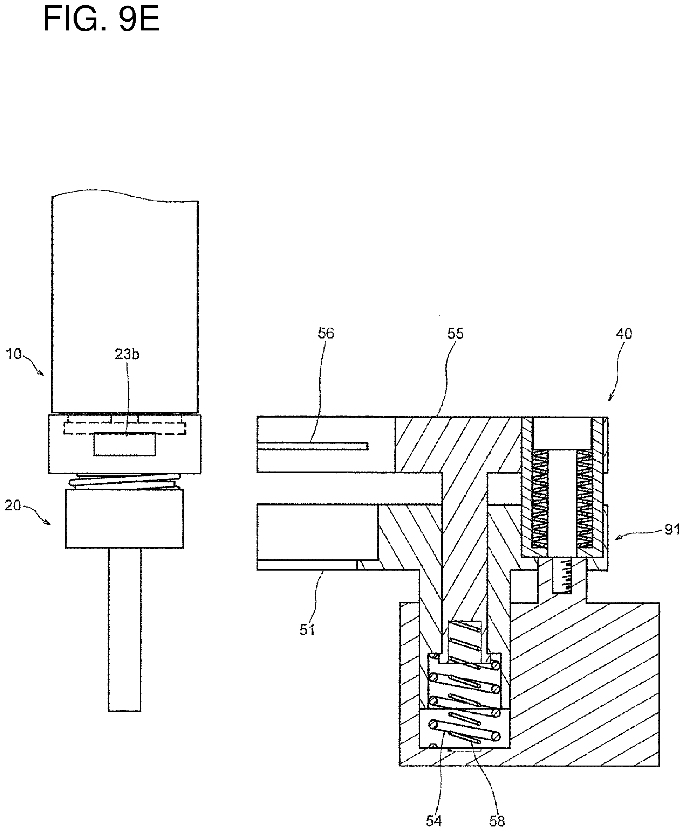

Next, the spindle 10 is moved forward. The receiving portion 23b comes out of the hook portion 56, and the operation lever 55 and the push lever 51 return to the initial position 91 (see FIG. 9E). This completes the transfer of the tool holder 20 from the tool magazine 40 to the spindle 10.

According to the tool magazine 40 of the present embodiment, the tool holder 20 can be automatically exchanged between the spindle 10 and the tool magazine 40.

When the spindle 10 is pulled up when the tool holder 20 is transferred from the spindle 10 to the tool magazine 40, the pulling force of the spindle 10 acting on the operation lever 55 is applied to the exchange position 1. The exchange position 1 is located in front of the operation lever guide 64. When the spindle 10 is pulled up, a moment is added to the operation lever guide 64. As the inclination suppression guide 59 is disposed closer to the exchange position 1 than the operation lever guide 64, the operation lever 55 is moved smoothly in the vertical direction.

The plunger 63 urges the operation sleeve 23 toward the sleeve abutment surface 55d. For example, even if the installation posture of the tool magazine 40 is changed so that the central axis 17 of the tool holder 20 at the exchange position 1 is horizontal, the position of the tool holder 20 is hardly displaced.

### Second Embodiment

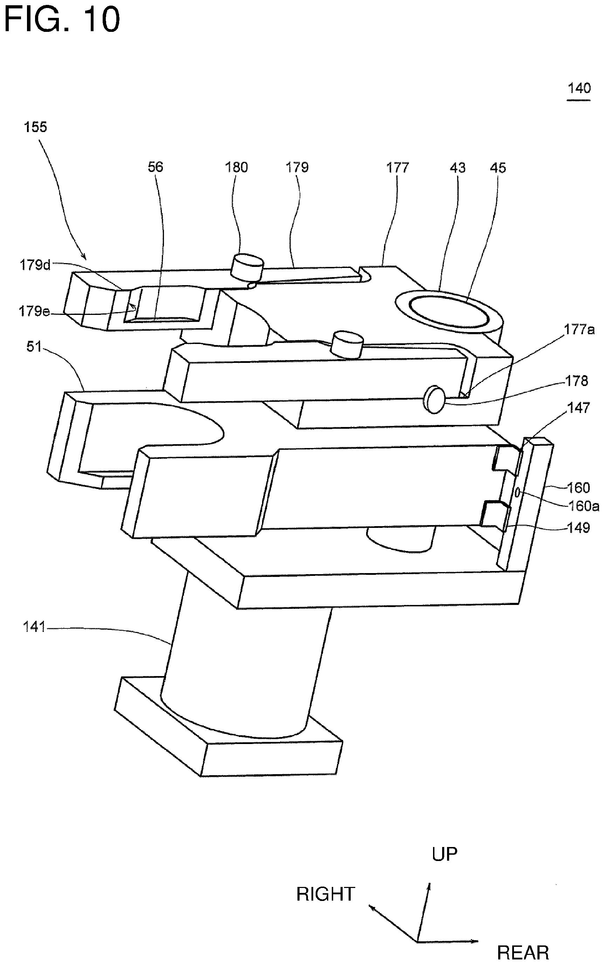

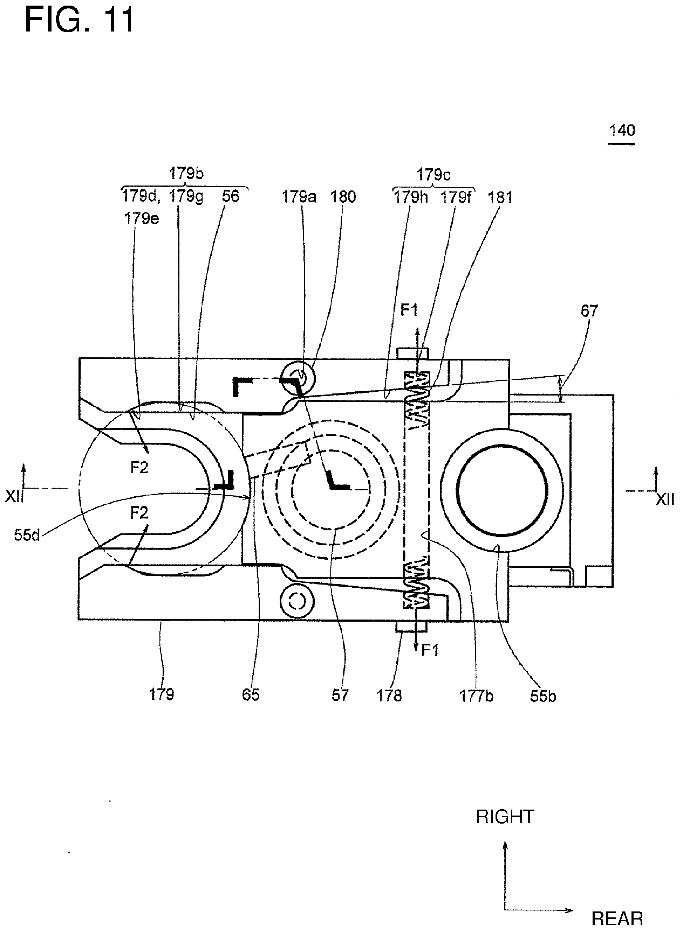

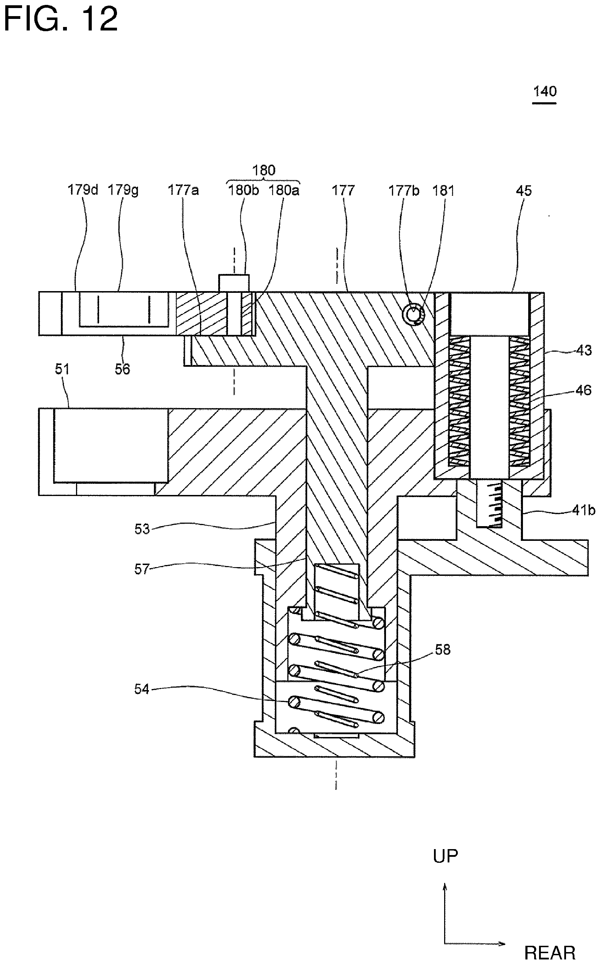

As illustrated in FIGs. 10 to 12, the tool magazine 140 according to the present embodiment includes an operation lever 155, a stopper 178, a magazine body 141, an over travel detection switch 160, a distal dog 147, and a basal dog 149. The tool magazine 140 of the present embodiment does not have the inclination suppression guide 59. Other configurations of the tool magazine 140 are substantially the same as the tool magazine 40 of the first embodiment.

The operation lever 155 includes a lever body 177, a pair of pinch levers 179, a pair of pinch pins 180, and a compression coil spring (elastic body) 181.

The lever body 177 has a pair of bench portions 177a, a guide bore 177b, a sleeve abutment surface 55d, and a spring post passing hole 55b. The lever body 177 has a rectangular plate shape. The pair of bench portions 177a are located at the front left and right end portions of the lever body 177. The bench portion 177a is a base located below the upper surface of the lever body 177. The bench portion 177a may extend toward the front end portion at the center portion of the lever body 177. The guide bore 177b is a cylindrical bore extending in the lateral direction. The guide bore 177b penetrates between the left and right bench portion 177a. The inner diameter of the guide bore 177b is substantially the same as the outer diameter of the compression coil spring 181. The sleeve abutment surface 55d is a front end surface of the lever body 177. The rear end of the lever body 177 extends to the center portion of the spring post passing hole 55b. The spring post passing hole 55b is semi-cylindrical toward the front.

Each of the pinch levers 179 is disposed on each of the bench portions 177a. The pair of pinch levers 179 are arranged symmetrically in the lateral direction. The pinch lever 179 includes a fulcrum hole 179a, a pinch portion 179b, and a lever portion 179c.

The fulcrum hole 179a is located in a central portion of the pinch lever 179. The fulcrum hole 179a penetrates the pinch lever 179 vertically upward.

The pinch portion 179b is a front portion of the pinch lever 179 relative to the fulcrum hole 179a. The pinch portion 179b includes a protrusion 179d, an abutment surface 179e, a relief portion 179g, and a hook portion 56. The protrusion 179d is disposed at the forward end of the pinch lever 179. The protrusion 179d has an abutment surface 179e. The abutment surface 179e approaches the left and right ends of the operation lever 155 toward the rear. The relief portion 179g extends rearward from the protrusion 179d. The abutment surface 179e, the relief portion 179g and the sleeve abutment surface 55d define an operation sleeve receiving hole 55a. The hook portion 56 is disposed at a lower end portion of the pinch portion 179b. The hook portion 56 is disposed below the relief portion 179g.

The lever portion 179c is a rear portion of the pinch lever 179 with respect to the fulcrum hole 179a. The lever portion 179c has a retaining bore 179f and an end face 179h. The end face 179h is arranged at inside of the operation lever 155 of the lever portion 179c, and is inclined outward toward the rear. An angle formed between the end face 179h and the bench portion 177a is defined as a relief angle 67. The retaining bore 179f is disposed at the rear end of the pinch lever 179. The retaining bore 179f extends laterally. The retaining bore 179f is a bottomed hole that opens to the end face 179h. The retaining bore 179f faces the guide bore 177b.

The pair of pinch pins 180 are respectively disposed at the front portion of the bench portion 177a. The pinch pin 180 extends in the vertical direction. The pinch pin 180 includes a shaft portion 180a and a head portion 180b. The shaft portion 180a passes through the fulcrum hole 179a. The shaft portion 180a slides in the fulcrum hole 179a. The head portion 180b holds the pinch lever 179 downward. The pinch pin 180 swingably supports the pinch lever 179 about the pinch pin 180.

The compression coil spring 181 passes through the guide bore 177b. The left and right ends of the compression coil spring 181 are supported by the retaining bore 179f. The compression coil spring 181 is arranged in a length shorter than the natural length. The compression coil spring 181 urges the lever portions 179c of the pair of pinch levers 179 to open.

The compression coil spring 181 applies a force F1 to the pair of pinch levers 179. The compression coil spring 181 thus pushes the pinch portion 179b radially inward of the operation sleeve receiving hole 55a. The pinch lever 179 serves as a lever with the pinch pin 180 as a fulcrum, the retaining bore 179f as a point of effort, and the protrusion 179d as a point of load. When the operation sleeve 23 is received into the operation sleeve receiving hole 55a, the protrusion 179d applies a force F2 to the operation sleeve 23. As the abutment surface 179e is inclined with respect to the front-rear direction, the force F2 applied to the operation sleeves 23 from the abutment surface 179e is directed slightly rearward. The force F2 is applied to the operation sleeve 23 symmetrically from the pair of abutment surfaces 179e arranged on the left and right sides. Thus, the operation sleeve 23 is urged rearward by the resultant force from the pair of abutment surface 179e. This causes the operation sleeve 23 to be brought into contact with the sleeve abutment surface 55d.

The pair of stoppers 178 is disposed at the left and right ends of the lever body 177. The stopper 178 has, for example, a right cylindrical shape. The stopper 178 partially extends above the bench portion 177a. The stopper 178 restricts the opening angle of the lever portion 179c. The stopper 178 suppresses the pinch portion 179b from being closed and facilitates to receive the operation sleeves 23.

It should be noted that the stopper 178 may be omitted when the front end portion of the lever body 177 is shaped so as to prevent the pinch portion 179b from being excessively closed.

The distal dog 147 and the basal dog 149 are disposed at the rear end of the push lever 51. The distal dog 147 is disposed above the basal dog 149.

The magazine body 141 is substantially identical to the magazine body 41. The magazine body 141 has an extra portion removed from the magazine body 41.

The over travel detection switch 160 is disposed at a rear end portion of the magazine body 141. The over travel detection switch 160 includes a detection element 160a. When the push lever 51 is moves upward and exceeds the basal end 92, the over travel detection switch 160 detects the basal dog 149. When the push lever 51 moves downward and exceeds the stroke distal end 94, the over travel detection switch 160 detects the distal dog 147.

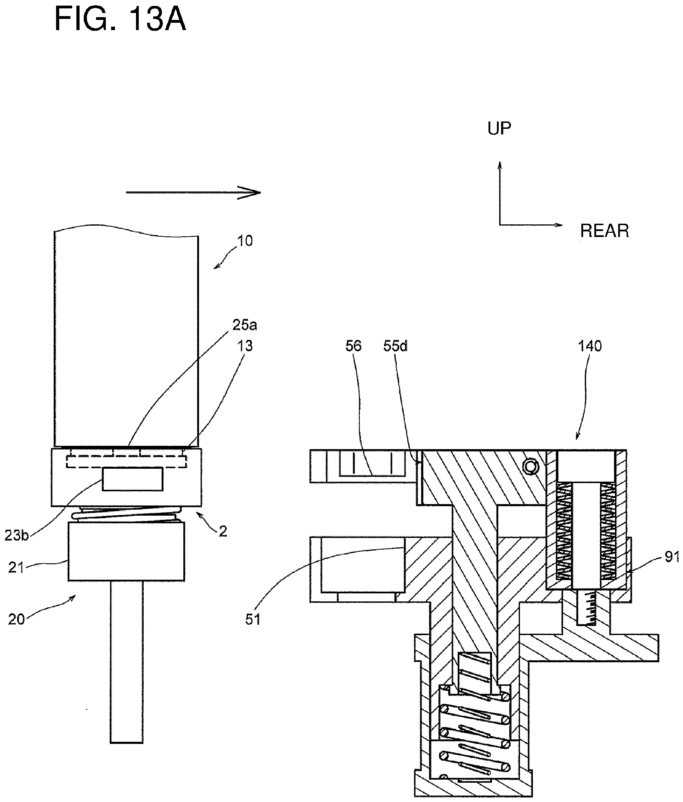

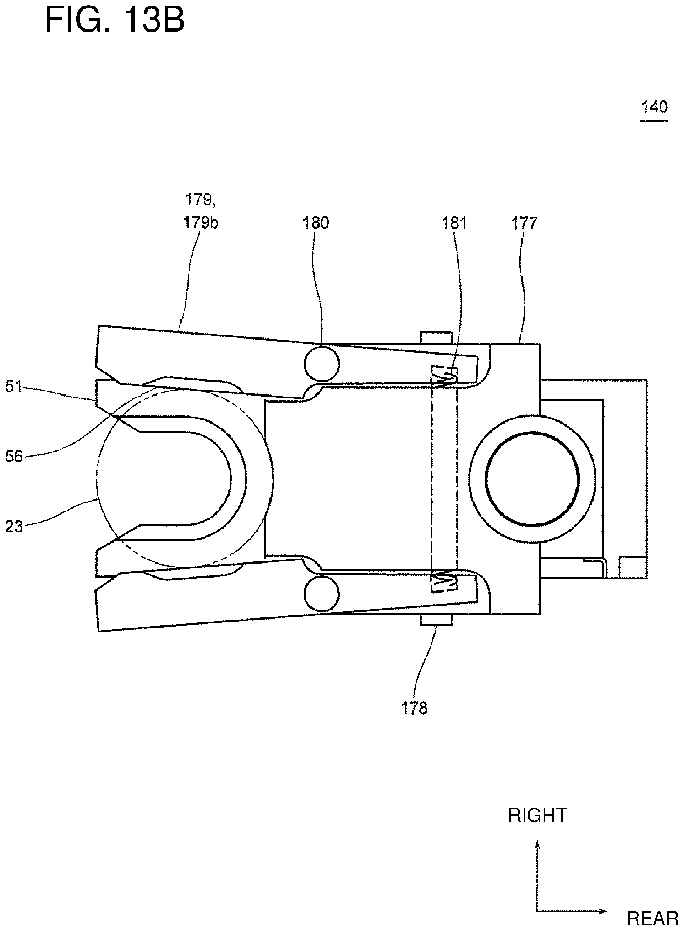

The operation and effect of the tool magazine 140 according to the present embodiment will be described referring to FIGs. 13A and 13B. Here, FIG. 13A is a cut view of the tool magazine 140 in the front-rear and up-down plane passing through the center of the operation sleeve receiving hole 55a. FIG. 13B is a plan view of the tool magazine 140 when the tool holder 20 is accidentally received in the tool magazine 140.

As shown in FIG. 13A, when the spindle 10 transfers the tool holder 20 to the tool magazine 140, the spindle 10 moves backward and the tool holder 20 moves toward the exchange position 1. As the tool holder 20 moves, the pinch lever 179 swings around the pinch pin 180 to open and close. Then, when the tool holder 20 reaches to the exchange position 1, the hook portion 56 is received in the receiving portion 23b. Also, when the tool holder 20 is pulled forward from the tool magazine 140, the pinch lever 179 opens and closes.

As shown in FIG. 13A, when the spindle 10 transfers the tool holder 20 to the tool magazine 140, the hook portion 56 and the receiving portion 23b may not align with each other in height or rotational phase. In the embodiment shown in FIG. 13B, the rotational phase is not matched. At this time, when the spindle 10 moves the tool holder 20 backward toward the exchange position 1, the hook portion 56 is not received in the receiving portion 23b, and the hook portion 56 collides with the cylindrical surface of the outer periphery of the operation sleeve 23.

The operation lever 155 according to the present embodiment is divided into a lever body 177 and a pinch lever 179. Then, the pinch lever 179 can be opened and closed by swinging about the pinch pin 180. As shown in FIG. 13B, the pinch lever 179 rotates against the elastic force of the compression coil spring 181 to open the pinch portion 179b as the spindle 10 moves. Here, the pinch portion 179b can open up to the relief angle 67. According to the tool magazine 140 of the present embodiment, damage to the tool holder 20 and the operation lever 155 can be suppressed as the pinch portion 179b is opened.

### Third Embodiment

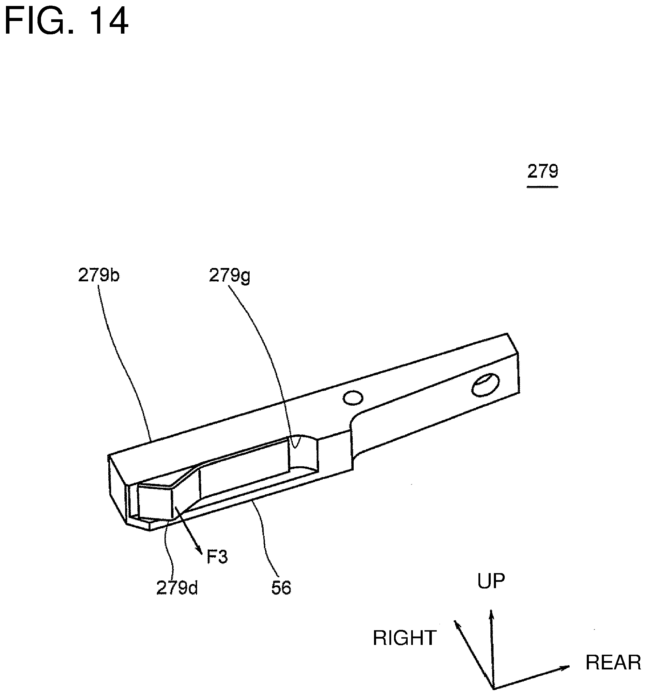

As shown in FIG. 14, a pinch lever 279 according to the present embodiment includes a relief portion 279g, a leaf spring (projection portion) 279d, and a hook portion 56. The other structure of the pinch lever 279 of the present embodiment is substantially the same as that of the pinch lever 179 of the second embodiment.

The relief portion 279g extends to the front end of the pinch lever 279. The hook portion 56 is disposed below the relief portion 279g. A front end portion of the hook portion 56 may be cut out.

The leaf spring 279d is triangular as viewed from above. When a force is applied to the outside of the operation lever 155, the leaf spring 279d elastically deforms and rebounds toward the force F3. The leaf spring 279d urges the received operation sleeve 23 toward the sleeve abutment surface 55d by an elastic force.

### Fourth Embodiment

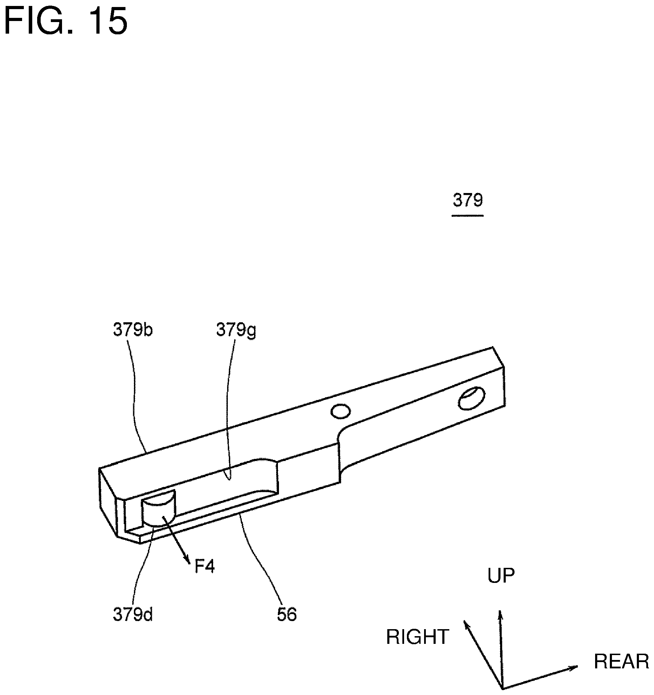

As shown in FIG. 15, a pinch lever 379 according to the present embodiment includes a relief portion 379g, a plunger (projection portion) 379d, and a hook portion 56. The other structure of the pinch lever 379 of the present embodiment is substantially the same as that of the pinch lever 179 of the second embodiment.

The relief portion 379g of the present embodiment is the same as the relief portion 279g of the third embodiment.

The plunger 379d is, for example, a spring plunger. The distal end of the plunger 379d is a right cylinder extending vertically. For example, the plunger 379d contains a coil spring. The plunger 379d is pushed out along the arrow F4. The plunger 379d urges the received operation sleeve 23 toward the sleeve abutment surface 55d by the elastic force of the coil spring. The plunger 379d may be a ball plunger.

The present invention is not limited to the above-described embodiments, and various modifications can be made without departing from the gist of the present invention, and all technical matters included in the technical idea described in the claims are the subject of the present invention. While the above embodiments have been shown by way of example, those skilled in the art will recognize that various alternatives, modifications, variations, and improvements can be made from the disclosure herein, which fall within the scope of the appended claims.

### Reference Signs List

- 10: Spindle
- 11: Spindle bore
- 13: Circumferential groove
- 15: Drive slot
- 20: Tool holder
- 21: Tool body
- 21a: Shank
- 23: Operation sleeve
- 23a: Drive key
- 23b: Receiving portion
- 25: Hold ring
- 25a: Hold claw
- 27: Holder spring (Holder elastic body)
- 40: Tool magazine
- 41: Magazine body
- 53d: Operation lever stopper
- 55: Operation lever
- 55a: Operation sleeve receiving hole
- 56: Hook portion
- 58: Operation spring (Operation elastic body)
- 64: Operation lever guide

## Claims

1. A tool holder (20) attachable to a spindle (10) including a spindle bore (11), a circumferential groove (13) located on an outer periphery of the spindle (10), and a drive slot (15) connected to the circumferential groove (13), the tool holder (20) comprising:
a tool body (21) including a shank (21a) configured to be received in the spindle bore (11);
an operation sleeve (23) disposed radially outside of the tool body (21), the operation sleeve (23) configured to be urged toward a basal end of the spindle (10), the operation sleeve (23) reciprocable along axial direction of the spindle (10), the operation sleeve (23) including
a drive key (23a) configured to be received in the drive slot (15) to transmit rotation of the spindle (10) to the tool body (21), and
a receiving portion (23b) located on an outer periphery of the operation sleeve (23),
a holder elastic body (27) configured to urge the operation sleeve (23) toward the spindle (10) with respect to the tool body (21); and
a hold ring (25) disposed on the tool body (21), the hold ring (25) including a hold claw (25a) configured to extend through the drive slot (15) to be hooked on the circumferential groove (13).

2. A tool magazine (40, 140) configured to store the tool holder (20) according to claim 1 in an exchangeable manner to the spindle (10), the tool magazine (40, 140) comprising:
a magazine body (41);
an operation lever (55, 155) disposed to the magazine body (41), the operation lever (55, 155) reciprocable in the axial direction of the spindle (10) with the operation sleeve (23) in a supportable manner, the operation lever (55, 155) including,
an operation sleeve receiving hole (55a) configured to receive the operation lever (23), and
a hook portion (56) disposed in the operation sleeve receiving hole (55a) to be hooked in the receiving portion (23b),
an operation lever guide (64, 57a, 53b) configured to guide the operation lever (55, 155) in the axial direction of the spindle (10); and
an operation elastic body (58) configured to urge the operation lever (55, 155) toward a basal end of the spindle (10) against an elastic force of the holder elastic body (27).

3. The tool magazine (40) according to claim 2, further comprising:
a push lever (51) including a pushing portion (52) configured to come in contact with the tool body (21), the push lever (51) reciprocable in the axial direction of the spindle (10);
a push lever guide (50, 53, 41c) configured to guide the push lever (51) in the axial direction of the spindle (10);
an anti-push elastic body (54) configured to urge the push lever (51) toward the basal end of the spindle (10); and
a push lever stopper (43a) configured to hold the push lever (51) so as not to come out of the magazine body (41).

4. The tool magazine (40, 140) according to claim 3, further comprising:
an elastic body support post (45) disposed in the magazine body (41); and
an anti-pull elastic body (46) disposed between the elastic body support post (45) and the push lever (51) to urge the push lever (51) toward the distal end of the spindle (10),
wherein the push lever (51) includes an operation lever stopper (53d) configured to hold the operation lever (55) so as not to come out of the magazine body (41).

5. The tool magazine (40, 140) according to claim 4, further comprising:
a distal stopper (41b) disposed on the magazine body (41),
wherein the push lever stopper (43a) is located between the anti-pull elastic body (46) and the push lever (51) to be urged toward the distal end of the spindle (10) by the anti-pull elastic body (46), and the push lever stopper (43a) reciprocates along the elastic body support post (45) toward the basal end of the spindle (10) from the distal stopper (41b).

6. The tool magazine (40, 140) according to any one of claims 2 to 5, wherein
the operation lever guide (64, 57a, 53b) includes,
an operation shaft (57a) extending from the operation lever (55), and
an operation lever guide bore (53b) configured to receive the operation shaft (57a),
the push lever guide (50, 53, 41c) includes,
a push shaft (53) extending from the push lever (51), and
a push lever guide bore (41c) located in the magazine body (41) to receive the push shaft (53), and
the operation lever guide bore (53b) penetrates the push shaft (53).

7. The tool magazine (40, 140) according to claim 6, wherein
the anti-push elastic body (54) is disposed in the push lever guide bore (41c), and the operation elastic body (58) is disposed in the push lever guide bore (41c).

8. The tool magazine (40, 140) according to any one of claims 2 to 7, further comprising:
an inclination suppression guide (59) disposed between a center of the tool holder (20) supported by the tool magazine (40) and the operation lever guide (64, 57a, 53b) to suppress the operation lever (55) from inclining with respect to the magazine body (41).

9. The tool magazine (40, 140) according to any one of claims 2 to 8, further comprising:
a tool holder detection switch (65) disposed on the operation lever (55) or the push lever (51) to detect the tool holder (20).

10. The tool magazine (40, 140) according to any one of claims 2 to 9, further comprising:
an over travel detection switch (60) disposed on the push lever (51);
a distal dog (47) disposed on the magazine body (41) to be detected by the over travel detection switch (60) when the push lever (51) reaches to a distal moving end of the spindle (10); and
a basal dog (49) disposed on the magazine body (41) to be detected by the over travel detection switch (60) when the push lever (51) reaches to a basal moving end of the spindle (10).

11. The tool magazine (140) according to any one of claims 2 to 10, wherein the operation lever (155) includes,
a lever body (177), and
a pair of pinch levers (179) supported by the lever body (177) in a swingable manner, the pair of pinch levers (179) each including the hook portion (56), the pair of pinch levers (179) configured to urge the operation sleeve (23) toward an inner side of the operation sleeve receiving hole (55a) so as to pinch the operation sleeve (23) from circumferential direction when the operation sleeve (23) is received in the operation sleeve receiving hole (55a).

12. The tool magazine (140) according to claim 11, wherein
the operation sleeve receiving hole (55a) has an opening (55c) at a receiving direction,
the lever body (177) includes a sleeve abutment surface (55d) located opposite to the opening (55c) of the operation sleeve receiving hole (55a).

13. The tool magazine (140) according to claim 12, wherein
the pinch lever (179) includes a protrusion (179d) protruding toward the operation sleeve receiving hole (55a) to urge the operation sleeve (23) received in the operation sleeve receiving hole (55a) toward the sleeve abutment surface (55d).

14. The tool magazine (140) according to any one of claims 11 to 13, wherein the operation lever (155) includes,
a pinch pin (180) located on the lever body (177), and
an elastic body (181) supported to be held between the pair of the pinch levers (179) to urge the pinch lever (179).
